# EUROPEAN PATENT SPECIFICATION

(11) **EP 2 988 274 B1**
(45) Date of publication and mention of the grant of the patent: **27.02.2019**
(21) Application number: 15180430.9
(22) Date of filing: 10.08.2015
(51) Int. Cl.: G06T 7/20, G06T 7/00

(54) **METHOD AND SYSTEM FOR VIDEO DATA PROCESSING**
VERFAHREN UND SYSTEM ZUR VIDEODATENVERARBEITUNG
PROCÉDÉ ET SYSTÈME DE TRAITEMENT DE DONNÉES VIDÉO

(30) Priority: 21.08.2014 US 201414465759
(43) Date of publication of application: 24.02.2016
(73) Proprietor: Sony Corporation, Tokyo 108-0075 (JP)
(72) Inventor: Yu, Liangyin, Fremont, CA California 94539 (US); Liu, Ming-Chang, San Jose, CA California 95130 (US)
(74) Representative: D Young & Co LLP

(56) References cited:
- HANG SIK SHIN ET AL: "Adaptive threshold method for the peak detection of photoplethysmographic waveform", COMPUTERS IN BIOLOGY AND MEDICINE., vol. 39, no. 12, 1 December 2009 (2009-12-01), pages 1145-1152, XP055246131, US ISSN: 0010-4825, DOI: 10.1016/j.compbiomed.2009.10.006
- ZHOU ZHI ET AL: "A new approach for skin recognition in near-infrared images", MOBILE MULTIMEDIA/IMAGE PROCESSING, SECURITY, AND APPLICATIONS 2011, SPIE, 1000 20TH ST. BELLINGHAM WA 98225-6705 USA, vol. 8063, no. 1, 13 May 2011 (2011-05-13) , pages 1-9, XP060014121, DOI: 10.1117/12.884232 [retrieved on 1901-01-01]
- HAYATO FUKUSHIMA ET AL: "Estimating heart rate using wrist-type Photoplethysmography and acceleration sensor while running", ENGINEERING IN MEDICINE AND BIOLOGY SOCIETY (EMBC), 2013 35TH ANNUAL INTERNATIONAL CONFERENCE OF THE IEEE, IEEE, 28 August 2012 (2012-08-28), pages 2901-2904, XP032463546, ISSN: 1557-170X, DOI: 10.1109/EMBC.2012.6346570

## Description

Various embodiments of the disclosure relate in general to video data processing. More specifically, various embodiments of the disclosure relate to video data processing to determine vital signs of a human subject.

Recent advancements in the field of medical science have made it possible to evaluate health status of a human subject, based on a low-cost optical technique, such as Photoplethysmography (PPG). The health status may be evaluated via a determination of vital signs (such as heart rate, respiratory rate, and/or blood pressure) of the human subject using non-contact medical equipment. Such non-contact medical equipment may be configured to use non-invasive PPG to measure the vital signs of the human subject.

However, in certain scenarios, the determination of the vital signs of multiple human subjects via the PPG may not be reliable in instances where the exposed subject area, other than the facial portion, of the multiple human subjects are in motion. Further, the determination of the vital signs of multiple human subjects via the PPG may not be reliable in instances where an illumination of ambient environment around the multiple human subjects is less than a certain threshold value. Furthermore, the determination of the vital signs of multiple human subjects via the PPG may not be reliable in instances where there are other non-stationary objects, such as plants that may move due to wind or air drift, in addition to the multiple human subjects in motion. In such scenarios, as the determination of the vital signs of the multiple human subjects are not reliable, consequently, the evaluation of the health status of the multiple human subjects may not be accurate.

Other prior art includes HANG SIK SHIN ET AL: "Adaptive threshold method for the peak detection of photoplethysmographic waveform", COMPUTERS IN BIOLOGY AND MEDICINE., vol.39, no. 12, 1 December 2009 (2009-12-01), pages 1145-1152, XP055246131, ZHOU ZHI ET AL: "A new approach for skin recognition in near-infrared images", MOBILE MULTIMEDIA/IMAGE PROCESSING, SECURITY, AND APPLICATIONS 2011, SPIE, 1000 20TH ST. BELLINGHAM WA 98225-6705 USA, vol. 8063, no. 1, 13 May 2011 (2011-05-13), pages 1-9, XP060014121 and HAYATO FUKUSHIMA ET AL: "Estimating heart rate using wrist-type Photoplethysmography and acceleration sensor while running" ENGINEERING IN MEDICINE AND BIOLOGY SOCIETY (EMBC), 2013 35TH ANNUAL INTERNATIONAL CONFERENCE OF THE IEEE, IEEE, 28 August 2012 (2012-08-28), pages 2901-2904, XP032463546.

Further limitations and disadvantages of conventional and traditional approaches will become apparent to one of skill in the art, through comparison of described systems with some aspects of the present disclosure, as set forth in the remainder of the present application and with reference to the drawings.summary

A method and a system are provided for processing video data substantially as shown in, and/or described in connection with, at least one of the figures, as set forth more completely in the claims.

These and other features and advantages of the present disclosure may be appreciated from a review of the following detailed description of the present disclosure, along with the accompanying figures in which like reference numerals refer to like parts throughout.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:
FIG. 1 is a block diagram illustrating a network environment for video data processing, in accordance with an embodiment of the disclosure.
FIG. 2 is a block diagram illustrating an exemplary video data processing device, in accordance with an embodiment of the disclosure.
FIG. 3 illustrates a first exemplary scenario for implementing the disclosed video data processing device and method, in accordance with an embodiment of the disclosure.
FIG. 4 illustrates an arrangement of various blocks in an Image Polyplethysmograph (IPPG) computation block that is implemented in the disclosed video data processing device and method, in accordance with an embodiment of the disclosure.
FIG. 5 and FIG. 6 illustrate a second exemplary scenario for implementing the disclosed video data processing device and method, in accordance with an embodiment of the disclosure.
FIG. 7 is a flow chart illustrating an exemplary method for video data processing, in accordance with an embodiment of the disclosure.
FIG. 8 is flow chart illustrating another exemplary method for video data processing, in accordance with an embodiment of the disclosure.

Exemplary aspects of the disclosure may comprise a method for video data processing. The method may comprise receiving video data of a human subject in an electronic device. Each of a sequence of frames of the received video data may be associated with a plurality of spectral components. A first peak and a second peak may be determined from a plurality of peaks that correspond to the plurality of spectral components. Amplitudes of the determined first peak and the determined second peak may exceed a first threshold value. A peak separation between the determined first peak and the determined second peak may be determined. The determined peak separation may be within a predetermined range. Based on the determined peak separation, a heart rate of the human subject may be determined.

In an embodiment, each of the sequence of frames may be associated with a plurality of channels. Each of the plurality of channels may be associated with the plurality of spectral components. In an embodiment, an amplitude of the determined first peak may exceed a second threshold value. In an embodiment, the method may comprise determining a heart rate of the human subject based on the determined first peak.

In an embodiment, the method may comprise discarding the determined second peak when a parameter associated with the determined second peak is not within the predetermined range. In an embodiment, the method may include comprising selecting one of the determined first peak and the determined second peak, based on a previous determined heart rate of the human subject. The parameter associated with the first peak and the second peak may be within the predetermined range.

In an embodiment, the peak separation may be determined based on a difference between the parameter associated with the second peak and the first peak. In an embodiment, the video data in each frame of the sequence of frames may comprise a plurality of channels. The plurality of channels may comprise a Red (R) channel, a Green (G) channel, and a Blue (B) channel.

In an embodiment, the method may comprise determining a plurality of spectral components based on a signal separation of the video data in each frame of the sequence of frames. In an embodiment, the method may comprise detecting the human subject in one of the sequence of frames.

In an embodiment, the method may comprise segmenting one of the sequence of frames that comprises the detected human subject. In an embodiment, the method may comprise determining a subject area of the detected human subject. The determined subject area may include a skin area of the human subject. In an embodiment, the subject area may be associated with the human subject using an identification tag. In an embodiment, the method may comprise tracking the determined subject area based on one or more physiological parameters. The plurality of spectral components may correspond to the tracked subject area. In an embodiment, the one or more physiological parameters may comprise one or more of a skin texture, a skin pattern, and/or one or more features associated with the detected human subject.

Another exemplary aspect of the disclosure may comprise a method for video data processing in the electronic device. The method may comprise receiving video data of a human subject. One or more of a sequence of frames of the received video data may comprise one or more objects. The method may further comprise determining a plurality of contour points associated with the one or more objects in the sequence of frames, such that a curvature associated with each of the plurality of contour points exceeds a curvature threshold value. The method may further comprise determining a first set of objects from the one or more objects in the sequence of frames based on a cyclic motion of a first set of contour points from the plurality of contour points. One or more peak values in a frequency spectrum of the cyclic motion of the determined first set of contour points may be determined. An amplitude of one of the determined one or more peak values may be above a pre-specified threshold value. Based on one of the determined one or more peak values, a respiratory rate of the human subject may be determined.

In an embodiment, the cyclic motion of the first set of contour points may be associated with a periodic recurrence of a displacement having a non-zero magnitude with respect to a reference contour point. The displacement may occur in a pre-defined set of opposite directions. In an embodiment, the non-cyclic motion of the second set of contour points may be associated with a periodic recurrence of a displacement having a non-zero magnitude with respect to a reference contour point. The displacement may occur in a random direction.

In an embodiment, the non-cyclic motion of the second set of contour points may be associated with a displacement having a zero magnitude with respect to a reference contour point. In an embodiment, the method may comprise determining the first set of contour points and the second set of contour points associated with the first set of objects and the second set of objects, respectively.

In an embodiment, the frequency spectrum may be determined based on a spectral motion analysis of the cyclic motion of the first set of contour points. In an embodiment, the method may comprise determining a second set of objects from the one or more objects in the sequence of frames based on a non-cyclic motion of a second set of contour points from the plurality of contour points.

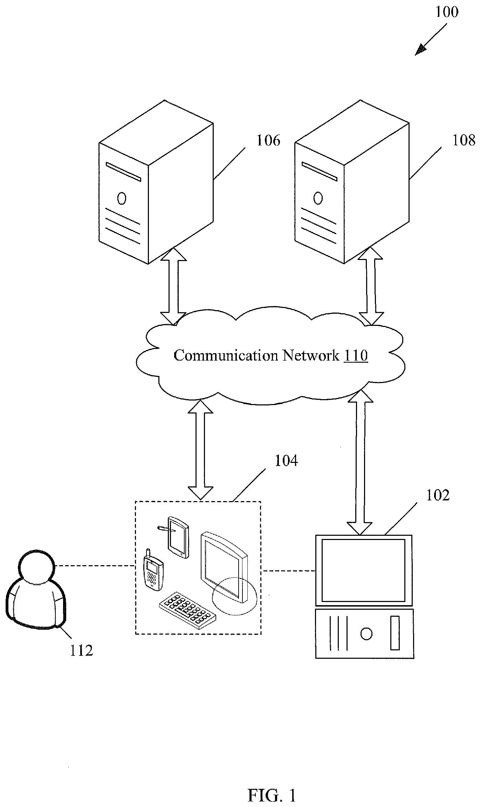

FIG. 1 is a block diagram illustrating a network environment 100 for video data processing, in accordance with an embodiment of the disclosure. With reference to FIG. 1, the network environment 100 may comprise a video data processing (VDP) device 102, a video-capturing device 104, a remote server 106, a notification server 108, a communication network 110, and a human subject 112.

The VDP device 102 may be communicatively coupled to the video-capturing device 104, the remote server 106, and the notification server 108, via the communication network 110. The video-capturing device 104 may receive video data related to the human subject 112, associated with the video-capturing device 104.

The VDP device 102 may comprise suitable logic, circuitry, interfaces, and/or code that may be operable to receive video data from the video-capturing device 104, via the communication network 110. In an embodiment, the VDP device may be operable to receive profile-based data from the remote server 106, via the communication network 110. In an embodiment, the VDP device may be operable to transmit one or more notifications to the notification server 108, via the communication network 110. Based on the received video data and the profile-based data, the VDP device 102 may display output data. The output data may be measured based on the received video data related to the human subject 112, which may be then shown on a display screen of the VDP device 102.

In an embodiment, the VDP device 102 may receive one or more instructions from a remote handheld device, such as a remote control apparatus (not shown). The VDP device 102 may remotely communicate with the remote handheld device, via a wired connection or short-range communication. The VDP device 102 may comprise a display screen that renders output data. The rendered output data may be based on the processed video data related to the human subject 112. The display screen may be further operable to display one or more features and/or applications of the VDP device 102 to an operator (not shown), such as a clinical operator. The display screen may be further operable to receive an input from the operator, via a touch-sensitive screen. The display screen may be realized through several known technologies such as, but not limited to, Liquid Crystal Display (LCD) display, Light Emitting Diode (LED) display, and/or Organic LED (OLED) display technology. Examples of the VDP device 102 may include a specialized medical equipment, a laptop, a tablet computer, a television, a set-top box (STB), a video display, and/or a personal digital assistant (PDA) device. Notwithstanding, the disclosure may not be so limited, the VDP device 102 may be any electronic device, without limiting the scope of the disclosure.

The video-capturing device 104 may comprise suitable logic, circuitry, interfaces, and/or code that may be operable to receive a stream of video data and transmit the received stream of video data to the VDP device 102. Such video data may comprise a sequence of frames that are processed by the VDP device 102. In an embodiment, the VDP device 102 may be included in the video-capturing device 104. In another embodiment, the VDP device 102 may remotely communicate with the video-capturing device 104, via the communication network 110. Examples of the video-capturing device 104 may include, but are not limited to, a digital camera, a surveillance camera, an internet protocol (IP) camera, a motion detector camera, a motion sensor camera, a remote camera, a range-finder camera, a three-dimensional (3-D) laser camera, a digital scanner, and/or a camcorder.

The remote server 106 may comprise suitable logic, circuitry, interfaces, and/or code that may be operable to maintain profile data related to the human subject 112. In an embodiment, the remote server 106 may be operable to transmit the profile-data of the human subject 112 to the VDP device 102. The remote server 106 may be associated with one or more social networking servers and/or application servers to determine the profile-data related to the human subject 112. Such a profile-data related to the human subject 112 may include personal details and images of the human subject 112, professional details of the human subject 112, the one or more other human subjects in a friend list of the human subject 112, information about social gatherings related to the human subject 112, and other information, (such as an image, a comment, and/or the like) posted by the one or more other users socially connected to the human subject 112.

The notification server 108 may comprise suitable logic, circuitry, interfaces, and/or code that may be operable to transmit a plurality of notification messages to the human subject 112. The notification messages may be transmitted to the human subject in response to the video data processed by the VDP device 102. In an embodiment, the notification server 108 may transmit a plurality of notifications to the friend list of the human subject 112, when the output data exceeds a predetermined threshold value. In such an embodiment, the friend list may include a medical physician associated with the human subject 112. The notification server 108 may be associated with one or more service operators, such as a network operator, a telecom operator, a television service provider, an on-demand content provider, an independent content provider company, an e-mail service provider, and/or social media service provider, and/or the like.

The communication network 110 may include a medium through which the VDP device 102 may communicate with the video-capturing device 104, the remote server 106, and the notification server 108. Examples of the communication network 110 may include, but are not limited to, the Internet, a cloud network, a Wireless Fidelity (Wi-Fi) network, a Wireless Local Area Network (WLAN), a Local Area Network (LAN), a telephone line (POTS), and/or a Metropolitan Area Network (MAN). Various devices in the network environment 100 may be operable to connect to the communication network 110, in accordance with various wired and wireless communication protocols. Examples of such wired and wireless communication protocols may include, but are not limited to, Transmission Control Protocol and Internet Protocol (TCP/IP), User Datagram Protocol (UDP), Hypertext Transfer Protocol (HTTP), File Transfer Protocol (FTP), ZigBee, EDGE, infrared (IR), IEEE 802.11, 802.16, cellular communication protocols, and/or Bluetooth (BT) communication protocols.

The human subject 112 may be able to exhibit one or more vital signs, such as heart rate, respiratory rate, and blood pressure. Based on a measurement of such vital signs, a clinical operator associated with the human subject may evaluate the health status of the human subject 112. In an embodiment, the human subject may be stationary. In another embodiment, the human subject may be in motion. The vital signs of the human subject 112 may be determined by the VDP device 102, in a non-contact manner. Notwithstanding, the disclosure may not be so limited, and more than one human subject may be associated with the VDP device 102, without limiting the scope of the disclosure.

In operation, the VDP device 102 may receive live video data of the human subject 112 from the video-capturing device 104. The live video data may comprise a sequence of frames. In an embodiment, a key frame may be acquired from the sequence of frames. Such a key frame may comprise the human subject 112. Based on the acquired key frame, the VDP device 102 may detect the human subject 112, based on profile-data received from the remote server 106. The VDP device 102 may segment the key frame that comprises the detected human subject 112, to determine a plurality of image segments. Based on the plurality of image segments, a subject area of the detected human subject 112 may be determined. In an embodiment, the determined subject area may include an exposed skin area of the human subject 112. The VDP device 102, in conjunction with the remote server 106, may be operable to associate an identification tag to the subject area associated with the human subject 112. The VDP device 102 may be further operable to track the determined subject area based on one or more physiological parameters. In an embodiment, the determined subject area may be tracked based on one or more computer vision algorithms, such as continuously adaptive mean shift (CAMShift), or Kanade-Lucas-Tomasi (KLT).

In an embodiment, the VDP device 102 may be operable to determine a plurality of channel components based on a signal separation of the video data in each frame of the sequence of frames. In an embodiment, the VDP device 102 may be operable to determine a plurality of spectral components, based on a fourier analysis of the plurality of channel components. In an embodiment, the VDP device 102 may be operable to determine the plurality of spectral components, based on a signal separation algorithm, such as an independent component analysis (ICA) algorithm, performed on the plurality of channels.

In an embodiment, the VDP device 102 may be operable to determine a first peak and a second peak that correspond to the plurality of spectral components. In an embodiment, the VDP device 102 may be operable to determine the first peak and the second peak, such that amplitudes of the first peak and the second peak exceed a first threshold value. In an embodiment, the VDP device 102 may be operable to determine a peak separation between the first peak and the second peak, such that the peak separation is within a predetermined range. In an embodiment, the VDP device 102 may be operable to determine the peak separation, based on a difference between a parameter associated with the second peak and the first peak. In an embodiment, the parameter may correspond to a unit, such as "Beats Per Minute", that correspond to x-axis of a spectral component from the plurality of spectral components.

In an embodiment, the VDP device 102 may be operable to select one of the first peak and the second peak, when the peak separation is within the predetermined range. In such an embodiment, the VDP device 102 may be operable to select one peak from the first peak and the second peak, based on a previous determined heart rate of the human subject 112, when the first peak and the second peak are within the predetermined range. In an embodiment, the VDP device 102 may be operable to determine a heart rate of the human subject 112, based on the selected first or the second peak.

In an embodiment, the VDP device 102 may determine that the peak separation is not within the predetermined range. In an embodiment, the VDP device 102 may determine that at least one peak from the first peak and the second peak is within the predetermined range. In instances where the first peak is within the predetermined range, the VDP device 102 may determine an amplitude of the first peak, such that the amplitude exceeds a second threshold value. The VDP device 102 may discard the second peak and determine the heart rate of the human subject 112, based on the first peak.

In an embodiment, the VDP device 102 may determine that the second peak is within the predetermined range, when the peak separation is not within the predetermined range. The VDP device 102 may determine an amplitude of the second peak, such that the amplitude exceeds a second threshold value. The VDP device 102 may discard the first peak and determine the heart rate of the human subject 112, based on the second peak. In an embodiment, the VDP device 102 may transmit the determined heart rate to the human subject 112, and/or a clinical operator associated with the human subject 112, via the notification server 108.

In an embodiment, the VDP device 102 may determine that the peak separation is not within the predetermined range. The VDP device 102 may further determine that none of the first peak and the second peak is within the predetermined range. In such an embodiment, the VDP device 102 may transmit an error message to the human subject 112, and/or the clinical operator associated with the human subject 112, via the notification server 108.

In an embodiment, the VDP device 102 may be operable to determine one or more objects, from the received video data of the human subject 112 that may comprise the sequence of frames. Examples of the one or more objects may include, but are not limited to, one or more human subjects in motion, such as the human subject 112, a non-stationary plant, and/or a stationary wall accessory. Each of the one or more objects may have an associated motion profile, such as a stationary motion profile or a non-stationary motion profile. In an embodiment, the stationary motion profile may correspond to zero motion. In an embodiment, the non-stationary motion profile may correspond to a cyclic motion. In another embodiment, the non-stationary motion profile may correspond to a non-cyclic motion.

In an embodiment, the VDP device 102 may be operable to determine an illumination level of an environment, such as a room, that comprises the one or more objects. In an embodiment, an illumination of the one or more objects may be provided when the VDP device 102 determines that an ambient illumination of the environment is less than a predetermined threshold value.

In an embodiment, the VDP device 102 may determine a plurality of contour points associated with the one or more objects in each of the sequence of frames. The plurality of contour points may be determined, based on a value of a curvature associated with each of the plurality of contour points, such that the curvature is greater than a curvature threshold value. In an embodiment, the VDP device 102 may determine a first set of objects from the one or more objects in the sequence of frames, based on a cyclic motion of a first set of contour points. The first set of contour points may comprise one or more contour points from the plurality of contour points.

In an embodiment, the VDP device 102 may be operable to determine one or more peak values in a frequency spectrum of the cyclic motion of the first set of contour points. The frequency spectrum may be determined by the VDP device 102, based on a spectral motion analysis of the cyclic motion of the first set of contour points. In an embodiment, the VDP device 102 may be operable to select a peak value from the determined one or more peak values. In an embodiment, the peak value may be selected such that an amplitude of the selected peak value exceeds a pre-specified threshold value. In an embodiment, the selected peak value may have a maximum amplitude with respect to other peaks. In an embodiment, the VDP device 102 may be operable to determine a respiratory rate of the human subject 112, based on the selected peak value. In an embodiment, the VDP device 102 may transmit the determined respiratory rate to the human subject 112, and/or a clinical operator associated with the human subject 112, via the notification server 108.

In an embodiment, the VDP device 102 may determine a second set of objects from the one or more objects in the sequence of frames, based on a non-cyclic motion of a second set of contour points. The second set of contour points may comprise one or more contour points from the plurality of contour points. In an embodiment, the VDP device 102 may be operable to filter the received one or more objects to remove the determined second set of objects with the non-cyclic motion.

In an embodiment, the cyclic motion of the first set of contour points may be associated with a periodic recurrence of a displacement of non-zero magnitude with respect to a reference contour point. Such a displacement may occur in a pre-defined set of opposite directions. In an embodiment, the non-cyclic motion of the second set of contour points may be associated with a periodic recurrence of a displacement of a non-zero magnitude, with respect to a reference contour point. Such a displacement may occur in a random direction. In an embodiment, the non-cyclic motion of the second set of contour points is associated with a displacement of zero magnitude, with respect to a reference contour point.

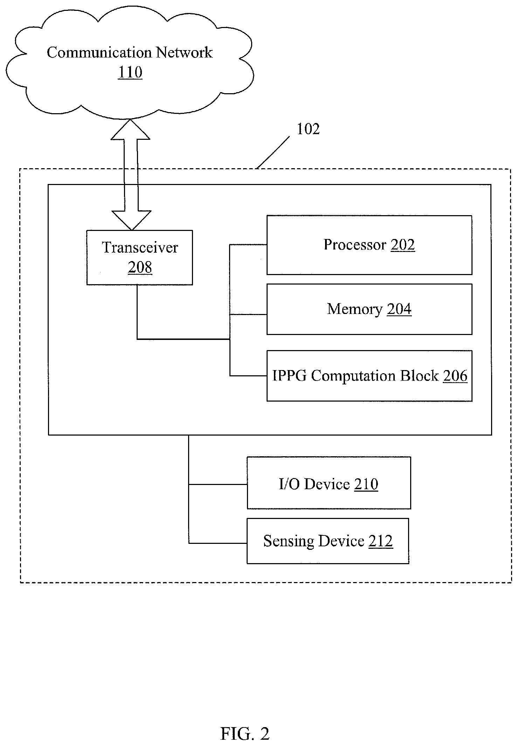

FIG. 2 is a block diagram illustrating an exemplary video data processing device (VDP), in accordance with an embodiment of the disclosure. FIG. 2 is explained in conjunction with elements from FIG. 1. With reference to FIG. 2, there is shown a VDP device 102. The VDP device 102 may comprise one or more processors, such as a processor 202, a memory 204, an Image Photoplethysmograph (IPPG) computation block 206, a transceiver 208, one or more Input-Output (I/O) devices, such as an I/O device 210, and a sensing device 212. The processor 202 may be communicatively coupled to the remote server 106 and the notification server 108, via the transceiver 208.

The processor 202 may comprise suitable logic, circuitry, interfaces, and/or code that may be operable to execute a set of instructions stored in the memory 204. The processor 202 may be communicatively coupled to the memory 204, the transceiver 208, and the I/O device 210. The processor 202 may be operable to process the video data received from the video-capturing device 104. The video data may be processed by the processor 202, based on one or more computer vision techniques, such as frame acquisition, face/skin detection, segmentation, region-of-interest (ROI) computation, and/or subject area tracking operation. The one or more computer vision techniques may be implemented, based on one or more computer vision algorithms, stored in the memory 204. The processor 202 may be implemented based on a number of processor technologies known in the art. Examples of the processor 202 may be an X86-based processor, a Reduced Instruction Set Computing (RISC) processor, an Application-Specific Integrated Circuit (ASIC) processor, a Complex Instruction Set Computing (CISC) processor, and/or any other processor.

The memory 204 may comprise suitable logic, circuitry, interfaces, and/or code that may be operable to store the set of instructions, which may be executed by the processor 202. The memory 204 may further include a Blind source Separation (BSS) algorithm that may be executed by the IPPG computation block 206 to perform a separation of a set of source signals from a set of mixed signals that correspond to the received video data. Various methods of the BSS algorithm may include, but are not limited to, a principal component analysis method, a singular value decomposition method, an independent component analysis method, a non-negative matrix factorization method, a low-complexity coding and decoding method, a stationary subspace analysis method, and/or a common spatial pattern method. The memory 204 may further include one or more computer vision algorithms that may be executed by the processor 202 to generate numerical or symbolic information, based on the video data, received by the processor 202. The memory 204 may be implemented based on, but not limited to, a Random Access Memory (RAM), a Read-Only Memory (ROM), a Hard Disk Drive (HDD), a storage server and/or a Secure Digital (SD) card.

The IPPG computation block 206 may comprise suitable logic, circuitry, interfaces, and/or code that may be operable to determine the heart rate and the respiratory rate of the human subject 112, based on the video data received from the video-capturing device 104. In an embodiment, the IPPG computation block 206 may be operable to execute the BSS algorithm and one or more computer vision algorithms stored in the memory 204, and determine the heart rate and the respiratory rate of the human subject 112.

The transceiver 208 may comprise suitable logic, circuitry, interfaces, and/or code that may be operable to communicate with the video-capturing device 104, remote server 106, and/or the television broadcast station (not shown), via various communication interfaces. The transceiver 208 may implement known technologies for supporting wired or wireless communication with the communication network 110. The transceiver 208 may include, but is not limited to, an antenna, a radio frequency (RF) transceiver, one or more amplifiers, a tuner, one or more oscillators, a digital signal processor, a coder-decoder (CODEC) chipset, a subscriber identity module (SIM) card, and/or a local buffer. The transceiver 208 may communicate via wireless communication with networks, such as the Internet, an Intranet and/or a wireless network, such as a cellular telephone network, a wireless local area network (LAN) and/or a metropolitan area network (MAN). The wireless communication may use any of a plurality of communication standards, protocols and technologies, such as Global System for Mobile Communications (GSM), Enhanced Data GSM Environment (EDGE), wideband code division multiple access (W-CDMA), code division multiple access (CDMA), time division multiple access (TDMA), Bluetooth, Wireless Fidelity (Wi-Fi) (e.g., IEEE 802.11a, IEEE 802.11b, IEEE 802.11g and/or IEEE 802.11n), voice over Internet Protocol (VoIP), Wi-MAX, a protocol for email, instant messaging, and/or Short Message Service (SMS).

The I/O device 210 may comprise suitable logic, circuitry, interfaces, and/or code that may be operable to receive an input or provide an output to the human subject 112. The I/O device 210 may comprise various input and output devices that may be operable to communicate with the processor 202. Examples of the input devices may include, but are not limited to, a keyboard, a mouse, a joystick, a touch screen, a microphone, a camera, and/or a docking station. Examples of the output devices may include, but are not limited to, the display screen, and/or a speaker.

The sensing device 212 may comprise suitable logic, circuitry, and/or interfaces that may be operable to include one or more sensors configured to detect one or more environment conditions. The one or more conditions, for example, ambient light, ambient noise, and/or motion detection, may be detected with respect to the VDP device 102.

In operation, the transceiver 208 may be operable to receive live video data of a human subject 112 from the video-capturing device 104, via the communication network 110. The transceiver 208 may be operable to transmit the received video data to the processor 202. In an embodiment, the received video data may comprise a sequence of frames. Each of the sequence of frames may comprise a colored digital image. The colored digital image may comprise a plurality of pixels. Such a plurality of pixels may correspond to one or more combinations of a plurality of primary colors, such as red, green and/or blue. In an embodiment, the colored digital image may comprise three channels, such as a Red (R) channel, a Green (G) channel, and a Blue (B) channel. In an embodiment, the colored digital image may have four channels, such as a Cyan (C) channel, a Magenta (M) channel, a Yellow (Y) channel, and a Black (B) channel. Notwithstanding, the disclosure may not be so limited, and the colored digital image may have unlimited channels and associated colors, without limiting the scope of the disclosure.

In an embodiment, the processor 202 may implement a parallel processing technique to process the received video data. Such a parallel processing technique may comprise one or more of pixel-level parallelism, instruction-level parallelism, and task-level parallelism. The parallel processing of the received video data may result in a reduced processing time and optimum use of one or more resources, such as the memory 204. Such a pipeline processing of the received video data may provide the human subject 112 with an enhanced viewing experience, colorimetric precision, a high degree of flexibility, low cost, low CPU utilization, a reduced bandwidth, and/or a reduced file size of the input image. Examples of a plurality of video data processing blocks that may implement the pipeline processing may include, but are not limited to, a face detection block, a graph segmentation block, a skin region-of-interest (ROI) calculation block, a skin tracking block, a signal mixing block, a source separation block, a non-linear optimization block, a joint diagnolization block, a light condition analyzer block, a contour and geometry analyzer block, and/or a motion and harmonic analyzer block.

In an embodiment, the processor 202 may be operable to receive a sequence of frames of live video data of the human subject 112 from the video-capturing device 104. In an embodiment, processor 202 may be operable to acquire a key frame from the sequence of frames. Such a key frame may comprise the human subject 112. In an embodiment, the processor 202 may be operable to detect the human subject 112, based on profile-data received from the remote server 106. In an embodiment, the processor 202 may be operable to detect a subject area, such as an exposed skin area other than the facial area, of the human subject 112. In an embodiment, the processor 202 may be operable to determine one or more physiological parameters, such as the skin texture, the skin pattern, and/or one or more features, associated with the human subject 112. In such an embodiment, the processor 202 may be operable to detect the human subject 112, based on profile-data received from the remote server 106 and the one or more physiological parameters associated with the human subject 112.

In an embodiment, the processor 202 may be operable to perform segmentation of the acquired key frame. Based on the segmentation, the processor 202 may be operable to partition the key frame into a plurality of pixel sets. Each pixel set of the plurality of pixel sets may comprise one or more pixels. In each pixel set, each pixel is similar to an adjacent pixel based on one or more characteristics or computed properties, such as a pixel color, a pixel intensity, or a pixel texture. Adjacent pixel sets may be significantly different from each other based on the same characteristic or computed property.

In an embodiment, the processor 202 may be operable to compute a region of interest (ROI) of the subject area, such as the face of the human subject 112, in the acquired frame, based on x- and y-coordinates of the subject area. The x- and y-coordinates of the subject area may be determined by the processor 202, based on one or more computer vision algorithms, such as Viola-Jones (VJ) face detection algorithm, stored in an Open Computer Vision (OpenCV) library in the memory 204. Notwithstanding, the disclosure may not be so limited, and other computer vision algorithms may also be used to detect the face/skin of the human subject 112, without limiting the scope of the disclosure.

In an embodiment, the subject area may not be the facial area of the human subject 112. In such an embodiment, the processor 202, in conjunction with the remote server 106, may be operable to associate an identification tag to the subject area associated with the human subject 112. In such an embodiment, an identity of the human subject 112 may be associated with the determined subject area, via the identification tag, based on the profile-data received from the remote server 106.

In an embodiment, the processor 202 may be operable to track the determined subject area, based on the one or more physiological parameters. Such a tracking may be performed on the sequence of frames.

In an embodiment, the IPPG computation block 206 may be configured to determine a plurality of channel components based on a signal separation of the video data in each frame of the sequence of frames. Based on the signal separation, the IPPG computation block 206 may determine the plurality of channel components, such as a red (R) component, a green (G) component, and a blue (B) component, in each frame of the sequence of frames. In an embodiment, the IPPG computation block 206 may be operable to estimate a mixing matrix in the signal separation algorithm, based on one or more criteria, such as a maximized signal entropy, a minimized signal mutual information, or a Joint Approximate Diagonalization of Eigenmatrices (JADE) method. The IPPG computation block 206 may utilize the mixing matrix to determine the plurality of spectral components associated with the plurality of channel components. In an embodiment, the IPPG computation block 206 may determine the plurality of spectral components, based on a fourier analysis of the plurality of channel components.

In an embodiment, the IPPG computation block 206 may be operable to determine a first peak and a second peak that correspond to the plurality of spectral components. The processor 202 may determine the first peak and the second peak, such that amplitudes of the first peak and the second peak exceed a first threshold value. In an embodiment, the first threshold value may be automatically determined by the processor 202, based on a value of normal skin reflectance variation and normal pulse rate of the human subject 112.

In an embodiment, the IPPG computation block 206 may be operable to determine a peak separation between the first peak and the second peak that correspond to each of the plurality of spectral components. In such an embodiment, the processor 202 may be operable to select one of the plurality of spectral components, such that the determined peak separation is within a predetermined range. In an embodiment, the predetermined range may correspond to a normal human heart rate range. The normal human heart rate range may be between 40 cycles per minute and 120 cycles per minute. Such a selected one of the plurality of spectral components may include an original source signal. Others of the plurality of spectral components may include noise signals.

In an embodiment, the IPPG computation block 206 may be operable to select one of the first peak and the second peak, when the peak separation is within the predetermined range. In an embodiment, the IPPG computation block 206 may be operable to select one peak from the first peak and the second peak, based on a previous determined heart rate of the human subject 112, when the first peak and the second peak are within the predetermined range. In an embodiment, the processor 202 may be operable to determine a heart rate of the human subject 112, based on the selected peak.

In an embodiment, the IPPG computation block 206 may determine that the peak separation is not within the predetermined range. In an embodiment, IPPG computation block 206 may determine that at least one peak from the first peak and the second peak is within the predetermined range. In instances where the first peak is within the predetermined range, the IPPG computation block 206 may determine an amplitude of the first peak, such that the amplitude exceeds a second threshold value. The processor 202 may discard the second peak and determine the heart rate of the human subject 112, based on the first peak.

In an embodiment, the IPPG computation block 206 may determine that the second peak is within the predetermined range, when the peak separation is not within the predetermined range. The IPPG computation block 206 may determine an amplitude of the second peak, such that the amplitude exceeds a second threshold value. The processor 202 may discard the first peak and determine the heart rate of the human subject 112, based on the second peak. In an embodiment, the processor 202 may transmit the determined heart rate to the human subject 112, and/or a clinical operator associated with the human subject 112, via the notification server 108.

In an embodiment, the IPPG computation block 206 may determine that the peak separation is not within the predetermined range. The IPPG computation block 206 may further determine that none of the first peak or the second peak is within the predetermined range. In such an embodiment, the processor 202 may transmit an error message to the human subject 112, and/or the clinical operator associated with the human subject 112, via the notification server 108.

In an embodiment, the processor 202 may be operable to provide an initial reading that corresponds to the determined heart rate of the human subject 112, at a first time period, such as 8 seconds. The initial reading may be iteratively updated by the processor 202 after every second of a second time period, such as 8 seconds. The processor 202 may be operable to provide an actual stabilized reading of the determined heart rate up to a third time period, such as 12 seconds, from the second time period.

With reference to another exemplary aspect of the disclosure, the video data of the human subject 112 that may comprise the sequence of frames, may be received by the sensing device 212. In an embodiment, one or more of the sequence of frames may comprise one or more objects. In an embodiment, the one or more objects may include one or more human subjects in motion, such as the human subject 112, one or more stationary objects, such as a lamp, and one or more non-stationary objects, such as curtains that may move due to wind or air drift. The sensing device 212 may be operable to transmit the received video data to the processor 202. The processor 202 may compare values of one or more environment conditions, associated with the electronic signals, such as luminance, with the predetermined threshold values. In an embodiment, the values associated with the one or more environment conditions may be less than the predetermined threshold values. In such an embodiment, the processor 202 may convert the poorly illuminated video data into an enhanced electronic signal.

The processor 202 may acquire a key frame from the enhanced sequence of frames that comprises the one or more objects. In an embodiment, the processor 202 may determine a plurality of contour points associated with the one or more objects in the key frame. The plurality of contour points may be determined, based on a value of a curvature associated with each of the plurality of contour points, such that the curvature is greater than a curvature threshold value. In an embodiment, the VDP device 102 may determine a first set of objects from the one or more objects in the sequence of frames, based on a cyclic motion of a first set of contour points. The first set of contour points may comprise one or more contour points from the plurality of contour points.

The processor 202 may further determine a second set of objects from the one or more objects in the sequence of frames, based on a non-cyclic motion of a second set of contour points. The second set of contour points may comprise one or more contour points from the plurality of contour points. In an embodiment, the processor 202 may be operable to filter the received one or more objects to remove the determined second set of objects with the non-cyclic motion.

In an embodiment, the processor 202 may analyze a displacement of the first set of contour points, and the second set of contour points, associated with the one or more non-stationary objects, with respect to a reference point. The analysis of the displacement of the first set of contour points, and the second set of contour points, may correspond to the enhanced sequence of key frames, which includes the acquired key frame. In an embodiment, the processor 202 may analyze the displacement of the first set of contour points, associated with the human subject 112, and the second set of contour points, associated with the one or more non-stationary objects, with respect to each other.

In an embodiment, the analysis may be based on a motion profile, such as a stationary profile, a cyclic motion, and/or a non-cyclic motion of the first set of contour points and the second set of contour points. In an embodiment, the processor 202 may determine the first set of objects that includes the human subject 112, from the one or more objects in the enhanced sequence of frames. The determination of the human subject 112 may be based on a cyclic motion of the first set of contour points. In an embodiment, the cyclic motion of the first set of contour points may be associated with a periodic recurrence of a displacement of non-zero magnitude with respect to a reference contour point. Such a displacement may occur in a pre-defined set of opposite directions, such as an upward-downward direction, or a backward-forward direction.

In an embodiment, the processor 202 may determine a second set of objects that includes the one or more non-stationary objects, based on a non-cyclic motion of the second set of contour points. In an embodiment, the non-cyclic motion of the second set of contour points may be associated with a non-periodic recurrence of a displacement of a non-zero magnitude with respect to a reference contour point. Such a displacement may occur in a random direction, such as a leftward direction or a rightward direction. In an embodiment, the non-cyclic motion of the second set of contour points may be associated with a displacement of zero magnitude with respect to a reference contour point.

In an embodiment, the processor 202 may filter the second set of contour points, associated with the one or more stationary objects from the key frame. In an embodiment, the processor 202 may perform a spectral analysis of the cyclic motion profile of the first set of objects, to estimate a frequency spectrum for the first set of objects, such as the human subject 112. The processor 202 may analyze the movement of the first set of contour points, and generate a deviation graph for the enhanced sequence of frames. The deviation graph may represent a magnitude of displacement of one or more contour points in the first set of contour points and the second contour point, with respect to a reference value. Based on the deviation graph, the processor 202 may further generate a frequency spectrum graph, which may correspond to the cyclic motion of the first set of contour points. The frequency spectrum graph may comprise one or more peak values that correspond to the displacement of the first contour point, and the second contour point, with respect to the reference value.

In an embodiment, the processor 202 may select a peak value from the determined one or more peak values. The peak value may be selected such that an amplitude of the selected peak value exceeds a pre-specified threshold value. In an embodiment, the processor 202 may select one peak value from the determined one or more peak values, such that an amplitude of the selected peak value is maximum. In an embodiment, the processor 202 may compute an average amplitude value based on a selected set of peak values. Based on computed average amplitude value or the maximum amplitude value, the processor 202 may be operable to determine a respiratory rate of the human subject 112. The processor 202 may be operable to display the determined respiratory rate of the human subject 112, in a portion of the enhanced sequence of frames.

In an embodiment, the processor 202 may be operable to provide an initial reading that corresponds to the determined respiratory rate of the human subject 112, at a first time period, such as 30 seconds. The initial reading may be iteratively updated by the processor 202 after every second of a second time period, such as 30 seconds. In an embodiment, the processor 202 may be operable to compute an actual stabilized reading of the determined respiratory rate based on a utilization of the enhanced sequence of frames, up to a third time period, such as 12 seconds, from the second time period. In an embodiment, the processor 202 may be operable to compute an actual stabilized reading of the determined respiratory rate based on a utilization of the enhanced sequence of frames for a fixed fourth time period, such as 60 seconds, from the third time period.

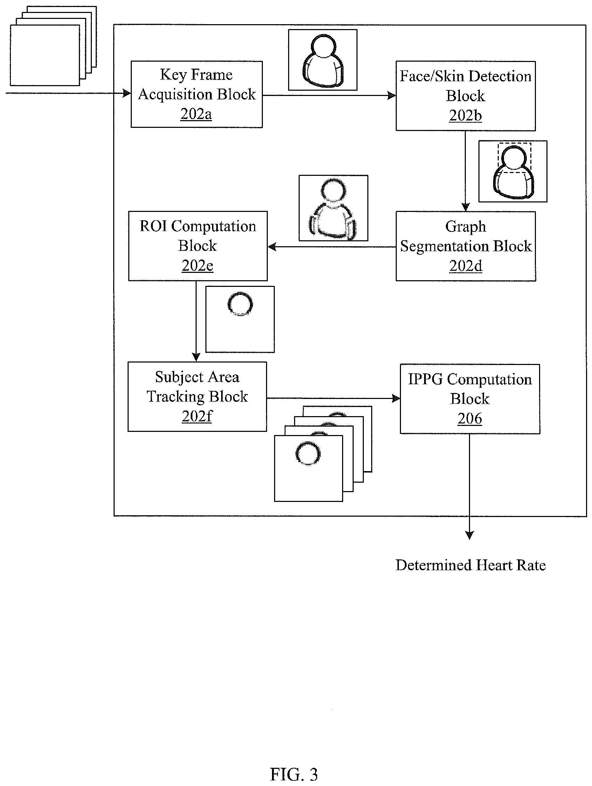

FIG. 3 illustrates a first exemplary scenario 300 for implementing the disclosed video data processing device and method, in accordance with an embodiment of the disclosure. FIG. 3 is explained in conjunction with elements from FIG. 1 and FIG. 2. With reference to FIG. 3, there is shown a first arrangement of a plurality of processing blocks of the processor 202, in conjunction with the IPPG computation block 206. The plurality of processing blocks of the processor 202, may include a key frame acquisition block 202a, a face/skin detection block 202b, a graph segmentation block 202d, a region-of-interest (ROI) computation block 202e, and a subject area tracking block 202f.

With reference to FIG. 3, the key frame acquisition block 202a may receive a sequence of frames from the video-capturing device 104. The sequence of frames may correspond to the video data captured by the video-capturing device 104. The key frame acquisition block 202a may acquire a key frame from the sequence of frames, such that the key frame comprises an image of a subject, such as the human subject 112. In an embodiment, the human subject 112 may be stationary. In an embodiment, the human subject 112 may be in non-stationary.

Based on the acquired key frame, the face/skin detection block 202b may detect the human subject 112, based on profile-data received from the remote server 106. In an embodiment, the face/skin detection block 202b may execute a face detection algorithm stored in the memory 204, to identify the human subject 112. In an embodiment, the face may not be captured by the video-capturing device 104, such as when the face of the human subject is covered by bandages. In such an embodiment, the face/skin detection block 202b may detect a subject area, such as the skin, of the human subject 112. Based on one or more physiological parameters, such as the skin texture and/or the skin pattern, the face/skin detection block 202b may associate an identification tag with the detected subject area.

Based on the detected face or subject area, the graph segmentation block 202d may segment the acquired key frame that comprises the detected human subject 112, to determine a plurality of image segments. Based on the plurality of image segments, an ROI computation block 202e may select at least one segment, such that the selected ROI is tracked by the subject area tracking block 202f, based on the one or more physiological parameters.

The IPPG computation block 206 may be configured to receive the selected ROI from the subject area tracking block 202f. The IPPG computation block 206 may be operable to determine the peaks, such as the first peak and/or the second peak, and a peak separation associated with the determined peaks, as explained in FIG. 2. In an embodiment, one of the plurality of processing blocks of the processor 202 (not shown) may be operable to select one of the determined peaks and determine a heart rate of the human subject 112, based on the selected peak. In an embodiment, the one of the plurality of processing blocks of the processor 202 may discard one of the determined peaks and determine the heart rate of the human subject 112, based on the other peak.

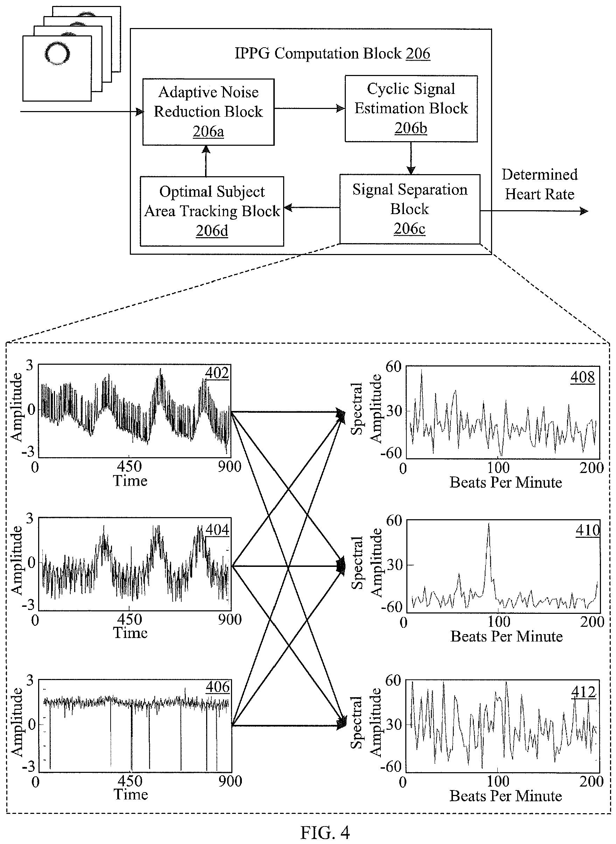

FIG. 4 illustrates an arrangement of various blocks in an Image Polyplethysmograph (IPPG) computation block that may be implemented in the disclosed video data processing device and method, in accordance with an embodiment of the present disclosure. FIG. 4 is explained in conjunction with elements from FIG. 1, FIG. 2, and FIG. 3. With reference to FIG. 4, the IPPG computation block 206 may comprise an adaptive noise reduction block 206a, a cyclic signal estimation block 206b, a signal separation block 206c, and an optimal subject area tracking block 206d.

The adaptive noise reduction block 206a may comprise suitable logic, circuitry, interfaces, and/or code that may be operable to denoise a set of frames that correspond to the video data. The set of frames may be denoised by the adaptive noise reduction block 206a, based on one or more of an adaptive, pixel-wise, temporal averaging method.

The cyclic signal estimation block 206b may comprise suitable logic, circuitry, interfaces, and/or code that may be operable to estimate a cyclic correlation between a plurality of source signals. In an embodiment, the cyclic correlation between the plurality of source signals may exist when the source signals are cyclostationary.

The signal separation block 206c may comprise suitable logic, circuitry, interfaces, and/or code that may be operable to recover independent signal sources from unknown linear mixtures of the unobserved independent source signals associated with the received video data. The signal separation block 206c may be operable to decorrelate the mixed signals to reduce higher-order statistical dependencies. The signal separation block 206c may generate a plurality of spectral components that correspond to the channels of the source signal associated with the received video data.

The optimal subject area tracking block 206d may comprise suitable logic, circuitry, interfaces, and/or code that may be operable to perform an optimized tracking of portions of region boundaries. The portions of region boundaries may exist between the set of frames that remain unchanged under the region merging and splitting. In an embodiment, the optimal subject area tracking block 206d may formulate matching regions across the frames as identifying parts of region boundaries that match each other. In an embodiment, the optimal subject area tracking block 206d may optimally match closed region contours with linear complexity, without resorting to heuristic assumptions.

In operation, the adaptive noise reduction block 206a may receive the set of frames that are tracked by the subject area tracking block 202f. The adaptive noise reduction block 206a may execute one or more adaptive temporal noise reduction algorithms to denoise the set of frames that correspond to the video data. In an embodiment, when the plurality of source signals are cyclostationary signals, the control passes to the cyclic signal estimation block 206b. In an embodiment, when the plurality of source signals are stationary signals, the control passes to the signal separation block 206c.

In an embodiment, the cyclic signal estimation block 206b may receive the denoised set of frames and may estimate a cyclic correlation between the cyclostationary plurality of source signals. The cyclic signal estimation block 206b may execute a cyclostationary blind source extraction algorithm stored in the memory 204. The cyclostationary blind source extraction algorithm may be based on a diagonalization of a cyclic correlation matrix at a cycle frequency estimated by the cyclic signal estimation block 206b.

With reference to FIG. 4, the signal separation block 206c, which may be configured to perform signal separation on a sequence of frames, may comprise one or more colored digital images. In an embodiment, a red (R) channel 402, a green (G) channel 404, and a blue (B) channel 406 may be associated with each frame of the sequence of frames. The R channel 402 may be represented as a set of red color values plotted between x-axis and y-axis. The x-axis may correspond to an amplitude of the red color value and the y-axis may correspond to time. Similarly, the G channel 404 may be represented as a set of green color values plotted between x-axis and y-axis. The x-axis may correspond to an amplitude of the green color value and the y-axis may correspond to time. Similarly, the B channel 406 may be represented as a set of blue color values plotted between an x-axis and a y-axis. The x-axis may correspond to an amplitude of the blue color value and the y-axis may correspond to time.

In an embodiment, the RGB-channel signals (X) may be generated by a set of unknown signals (S), linearly mixed by an unknown mixing matrix (A). In accordance with the embodiment, the RGB-channel signals may be represented as, X(Δ)=AS(Δ), where Δ may be an independent variable, such as a time-based variable for time-based signals, a spatial coordinate-based variable for image-based signals, a spatio-temporal variable for a sequence of frames-based signal, or a wavelength for multispectral signals. The signal separation block 206c may use the blind source separation algorithm to implement Independent component analysis (ICA) to estimate the mixing matrix A. Based on the estimated mixing matrix A, the signal separation block 206c may be operable to solve an inverse problem of computing the RGB-channel source signal S(Δ).

In an embodiment, the signal separation block 206c may be operable to estimate the mixing matrix A, based on a maximization of measured signal entropy. In such an embodiment, a non-linear optimization may be performed on the measured signal entropy by the signal separation block 206c.

In an embodiment, the signal separation block 206c may be operable to estimate the mixing matrix A, based on a minimization of measured signal mutual information. In such an embodiment, a non-linear optimization of the measured signal mutual information may be performed by the signal separation block 206c.

In an embodiment, the signal separation block 206c may be operable to estimate the mixing matrix A, based on Joint Approximate Diagnoalization of Eigenmatrices (JADE) method. In such an embodiment, the signal separation block 206c may replace an independent metric by a set of diagonality matrices. The JADE method may be implemented on a non-Gaussian, non-stationary and non-flat spectrum of the RGB-channel signals (X). In an embodiment, the JADE method may be implemented on a cumulated fourth order statistics of the non-Gaussian RGB-channel signals (X).

In an embodiment, the signal separation block 206c may be operable to a compute a first spectral component 408, a second spectral component 410, and a third spectral component 412, that correspond to the RGB-channel signals, based on the estimated mixing matrix A. In an embodiment, the first spectral component 408, the second spectral component 410, and the third spectral component 412, may be represented as a plurality of sets of color values plotted between x-axis and y-axis. The x-axis may correspond to a first parameter, "Beats per Minute". The y-axis may correspond to a second parameter, "Spectral Amplitude", of the plurality of sets of color values.

In an embodiment, the signal separation block 206c may be operable to determine a plurality of peak values that correspond to each of the first spectral component 408, the second spectral component 410, and the third spectral component 412. In an embodiment, the selected one of the plurality of spectral components may correspond to the second spectral component 410, based on a peak separation between the first peak value and a second peak value , within a predetermined range, such as a range of 40-120 cycles per minute.

The signal separation block 206c may be operable to select one or more peak values, such as the first peak value and the second peak value, from the plurality of peak values. The one or more peak values may be selected such that an amplitude of the first peak value, and the second peak value , may exceed a first threshold value, such as a spectral amplitude of magnitude 40. Based on the selection of the first peak value and the second peak value, the signal separation block 206c may be operable to determine a peak separation between the first peak value, and the second peak value. The signal separation block 206c may be operable to determine a peak separation between the first peak value, and the second peak value, within the predetermined range. In an embodiment, the signal separation block 206c may select one peak from the first peak value and the second peak value, based on a previous determined heart rate of the human subject 112, when the first peak value and the second peak value are within the predetermined range. In an embodiment, the processor 202 may be operable to determine a heart rate of the human subject 112, based on the selected peak value.

In an embodiment, the signal separation block 206c may determine that the peak separation is not within the predetermined range. In an embodiment, signal separation block 206c may determine that at least one peak value, such as the first peak value, is within the predetermined range. In instances where the first peak value is within the predetermined range, the signal separation block 206c may determine an amplitude of the first peak value, such that the amplitude exceeds a second threshold value, such as a spectral amplitude of magnitude 40. The signal separation block 206c may discard the second peak value and determine the heart rate of the human subject 112, based on the first peak value.

In an embodiment, the signal separation block 206c may determine that the second peak value is within the predetermined range, when the peak separation is not within the predetermined range. The signal separation block 206c may determine an amplitude of the second peak value, such that the amplitude exceeds a second threshold value, such as the spectral amplitude of magnitude 40. The signal separation block 206c may discard the first peak value and determine the heart rate of the human subject 112, based on the second peak value. In an embodiment, the processor 202 may transmit the determined heart rate to the human subject 112, and/or a clinical operator associated with the human subject 112, via the notification server 108.

In an embodiment, the optimal subject area tracking block 206d may perform an optimized tracking of portions of region boundaries of the sequence of frames. In an embodiment, the optimal subject area tracking block 206d may formulate matching regions across the sequence of frames. The optimal subject area tracking block 206d may transmit the merged frames to the adaptive noise reduction block 206a for the next key frame.

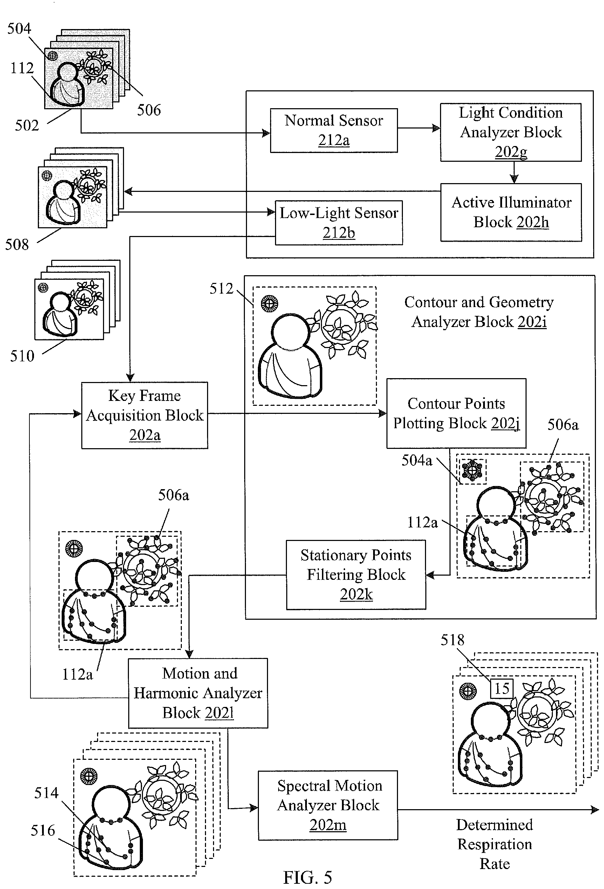

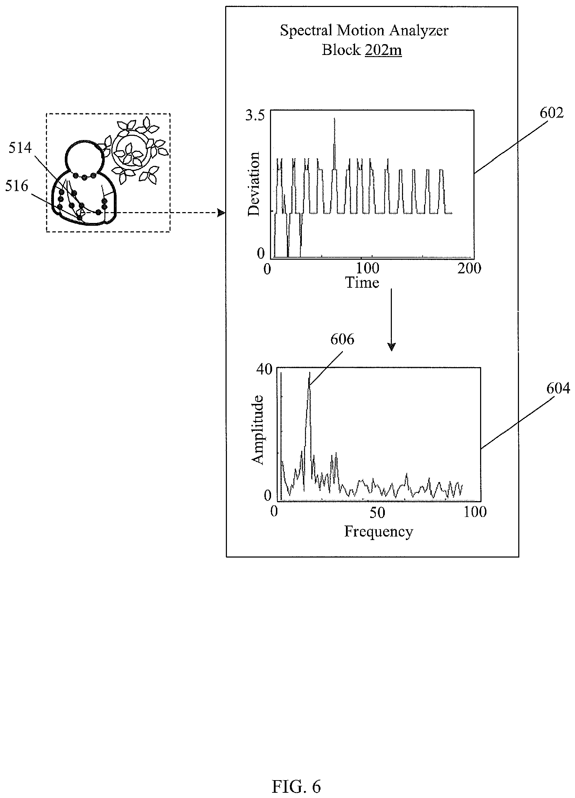

FIG. 5 and FIG. 6 illustrate a second exemplary scenario for implementing the disclosed video data processing device and method, in accordance with an embodiment of the disclosure. FIG. 5 and FIG. 6 are explained in conjunction with elements from FIG. 1 and FIG. 2. With reference to FIG. 5, there is shown an arrangement of a plurality of sensors of the sensing device 212, and a plurality of processing blocks of the processor 202. The plurality of sensors of the sensing device 212 may comprise a normal sensor 212a and a low-light sensor 212b. The plurality of processing blocks of the processor 202 may comprise the key frame acquisition block 202a, a light condition analyzer block 202g, an active illuminator block 202h, a contour and geometry analyzer block 202i that may comprise a contour points plotting block 202j and a stationary points filtering block 202k, a motion and harmonic analyzer block 202l, and a spectral motion analyzer block 202m. The key frame acquisition block 202a has been explained in FIG. 3. With reference to FIG. 5, there is also shown the human subject 112, a sequence of frames 502, a stationary object 504, a non-stationary object 506, an active-illuminated sequence of frames 508, an enhanced sequence of frames 510, a key frame 512, a first set of contour points 112a, two second sets of contour points 504a and 506a, a first contour point 514, a second contour point 516, and a first portion 518.

The normal sensor 212a may comprise suitable logic, circuitry, interfaces, and/or code that may be operable to convert the video data into an electronic signal. The video data may comprise the sequence of frames 502. The sequence of frames 502 may comprise an image of the human subject 112, the non-stationary object 506 (such as a plant), and a stationary object 504 (such as a wall lamp). Examples of the normal sensor 212a may include, but are not limited to a Bayer filter sensor, a layered pixel sensor, and/or a dichroic prism based sensor.

The low-light sensor 212b may comprise suitable logic, circuitry, interfaces, and/or code that may be operable to convert a poorly illuminated video data into an enhanced electronic signal. In an embodiment, the low-light sensor 212b may convert a poorly illuminated sequence of frames 502 into an enhanced sequence of frames 510. The low-light sensor 212b may use image intensifiers or on-chip gain charge-coupled device (CCD) multipliers, and/or high-sensitivity complementary metal-oxide-semiconductor (CMOS) sensors for the poorly illuminated video data.

The light condition analyzer block 202g may comprise suitable logic, circuitry, interfaces, and/or code that may be operable to receive electronic signals, which correspond to the sequence of frames 502, from the normal sensor 212a. Based on the received electronic signals, the light condition analyzer block 202g may analyze ambient illumination of an environment associated with the sequence of frames 502. The light condition analyzer block 202g may compare the ambient illumination of the environment with a predetermined threshold value. Based on the comparison, the light condition analyzer block 202g may provide an instruction to the active illuminator block 202h to illuminate the environment.

The active illuminator block 202h may comprise suitable logic, circuitry, interfaces, and/or code that may be operable to illuminate the environment when the ambient illumination of the environment is less than the predetermined threshold value. The active illuminator block 202h may be operable to couple an imaging intensification technology with an active source of illumination in the near infrared (NIR) or shortwave infrared (SWIR) band. Based on the illumination, the active illuminator block 202h may generate an actively-illuminated sequence of frames 508.

The key frame acquisition block 202a may comprise suitable logic, circuitry, interfaces, and/or code that may be operable to acquire a key frame 512 from the enhanced sequence of frames 510. The contour and geometry analyzer block 202i may comprise suitable logic, circuitry, interfaces, and/or code that may be operable to determine a plurality of contour points associated with the one or more objects. The contour points plotting block 202j may comprise suitable logic, circuitry, interfaces, and/or code that may be operable to select a set of contour points associated with a set of objects from the plurality of contour points. A curvature (or slope) associated with each of the selected set of contour points is greater than a predetermined threshold value. The stationary points filtering block 202k may comprise suitable logic, circuitry, interfaces, and/or code that may be operable to filter one or more stationary contour points from the selected set of contour points associated with the set of objects.

The motion and harmonic analyzer block 202l may comprise suitable logic, circuitry, interfaces, and/or code that may be operable to analyze the set of objects, based on a motion profile of the set of objects. The motion profile of the set of objects may be determined based on a movement of the plurality of contour points with respect to each other or with respect to a reference. Examples of the motion profile may include, but is not limited to, a stationary profile, a cyclic motion, or a non-cyclic motion.

The spectral motion analyzer block 202m may comprise suitable logic, circuitry, interfaces, and/or code that may be operable to perform a spectral analysis of the motion profile of the one or more objects. The spectral analysis may be performed on the motion profile of the one or more objects to estimate a frequency spectrum for the one or more objects.

With reference to FIG. 5, the sequence of frames that correspond to the video data may be received by the normal sensor 212a and converted into electronic signals. The electronic signals are transmitted to the light condition analyzer block 202g. The light condition analyzer block 202g may compare values associated with one or more environment conditions, associated with the electronic signals, such as luminance, to the predetermined threshold value. In an embodiment, the values associated with one or more environment conditions may be less than the predetermined threshold value. In such an embodiment, the light condition analyzer block 202g may transmit such electronic signals to the active illuminator block 202h. In an embodiment, the active illuminator block 202h may use an imaging intensification technology in conjunction with an active source of illumination in the NIR or SWIR band. In such an embodiment, the low-light sensor 212b may assist the active illuminator block 202h in the conversion of the poorly illuminated video data into the enhanced electronic signal. Such an enhanced electronic signal may be transmitted to the key frame acquisition block 202a.

The key frame acquisition block 202a may acquire a key frame 512 from the enhanced sequence of frames 510. The enhanced sequence of frames 510 may comprise one or more objects. With reference to FIG. 5, the one or more objects may include the human subject 112, the stationary object 504 (such as a wall lamp), and the non-stationary object 506 (such as a plant). The key frame acquisition block 202a may transmit the acquired key frame 512 to the contour and geometry analyzer block 202i. The contour and geometry analyzer block 202i may determine a plurality of contour points associated with the one or more objects in the key frame 512.

The contour points plotting block 202j may select the first set of contour points 112a associated with the human subject 112. The contour points plotting block 202j may further select a second set of contour points 504a, associated with the stationary object 504, and an alternative second set of contour points 506a associated with the non-stationary object 506. The selection of the first set of contour points 112a, and the two second sets of contour points 504a and 506a, may be based on a value of a curvature being greater than the curvature threshold value. The stationary points filtering block 202k may filter the second set of contour points 504a, associated with the stationary object 504 from the key frame 512.

The motion and harmonic analyzer block 2021 may analyze the displacement of the first set of contour points 112a, and the second set of contour points 504a, with respect to a reference point. The analysis of the displacement of the first set of contour points 112a, and the second set of contour points 504a, may be based on the enhanced sequence of frames 510, which includes the key frame 512. In an embodiment, the motion and harmonic analyzer block 2021 may analyze the displacement of the first set of contour points 112a, and the second set of contour points 504a, with respect to each other.

In an embodiment, the analysis may be based on a motion profile of the first set of contour points 112a, and the second set of contour points 504a. Examples of the motion profile may include, but are not limited to, a stationary profile, a cyclic motion, and/or a non-cyclic motion. In an embodiment, the Motion and Harmonic Analyzer Block 2021 may determine a first set of objects, such as the human subject 112, from the one or more objects in the enhanced sequence of frames 510. Determination of the first set of objects may be based on a cyclic motion of the first set of contour points 112a. In an embodiment, the cyclic motion of the first set of contour points 112a may be associated with a periodic recurrence of a displacement of non-zero magnitude with respect to a reference contour point. Such a displacement may occur in a pre-defined set of opposite directions, such as an upward-downward direction, or a backward-forward direction.

In an embodiment, the motion and harmonic analyzer block 202l may determine a second set of objects, such as the stationary object 504 (such as a wall lamp), based on the non-cyclic motion of the second set of contour points 504a. In an embodiment, the non-cyclic motion of the second set of contour points 504a may be associated with a displacement of zero magnitude with respect to a reference contour point.

In an embodiment, the motion and harmonic analyzer block 202l may determine another second set of objects, such as the non-stationary object 506 (the plant), based on a non-cyclic motion of the other second set of contour points 506a. In an embodiment, the non-cyclic motion of the other second set of contour points 506a may be associated with a non-periodic recurrence of a displacement of a non-zero magnitude with respect to a reference contour point. Such a displacement may occur in a random direction, such as a leftward direction or a rightward direction.

In an embodiment, the spectral motion analyzer block 202m may perform a spectral analysis of the cyclic motion profile of the first set of objects, such as the human subject 112, in the enhanced sequence of frames 510. The spectral analysis may be performed on the motion profile of the one or more objects, to estimate a frequency spectrum for the first set of objects, such as the human subject 112. With reference to FIG. 6, the spectral motion analyzer block 202m may analyze the movement of the first set of contour points, such as 502 and 504, and generate a deviation graph 602 for the enhanced sequence of frames 510. The deviation graph 602 may represent a magnitude of displacement of one or more contour points in the first set of contour points 112a, such as the first contour point 514 and the second contour point 516, with respect to a reference value. The x-axis of the deviation graph 602 may represent a parameter, "Time", and the y-axis of the deviation graph 602 may represent another parameter, "Deviation".

Based on the deviation graph, the spectral motion analyzer block 202m may further generate a frequency spectrum graph 604, which corresponds to the cyclic motion of the first set of contour points 112a. The x-axis of the frequency spectrum graph 604 may represent a parameter, "Frequency", and the y-axis of the frequency spectrum graph 604, may represent another parameter, "Amplitude". The frequency spectrum graph 604 may comprise one or more peak values that correspond to the displacement of the first contour point 514, and the second contour point 516, with respect to the reference value. In an embodiment, the spectral motion analyzer block 202m may select a set of peak values from the determined one or more peak values. The set of peak values may be selected such that an amplitude of each of the selected set of peak values exceeds a pre-specified threshold, for example an amplitude of value 20. In such an embodiment, the spectral motion analyzer block 202m may compute an average amplitude value based on the selected set of peak values. In an embodiment, the spectral motion analyzer block 202m may select one peak value, such as the peak value of the peak 606, from the determined one or more peak values, such that an amplitude of the selected peak 606 is maximum.

Based on computed average amplitude value or the maximum amplitude value, the processor 202 may be operable to determine a respiratory rate of the first set of objects, such as the human subject 112. The processor 202 may be operable to display the determined respiratory rate of the human subject 112, in the first portion 518 of the enhanced sequence of frames 510. With respect to FIG. 6, there is shown the first portion 518 shows a value of "15" as the determined respiratory rate of the human subject 112. In instances where the determined respiratory rate is less than or greater than the recommended value, such as "12", the VDP device 102 may be operable to transmit the determined respiratory rate to the notification server 108. The notification server 108 may transmit a notification message to the human subject 112, and the medical physician associated with the human subject 112.

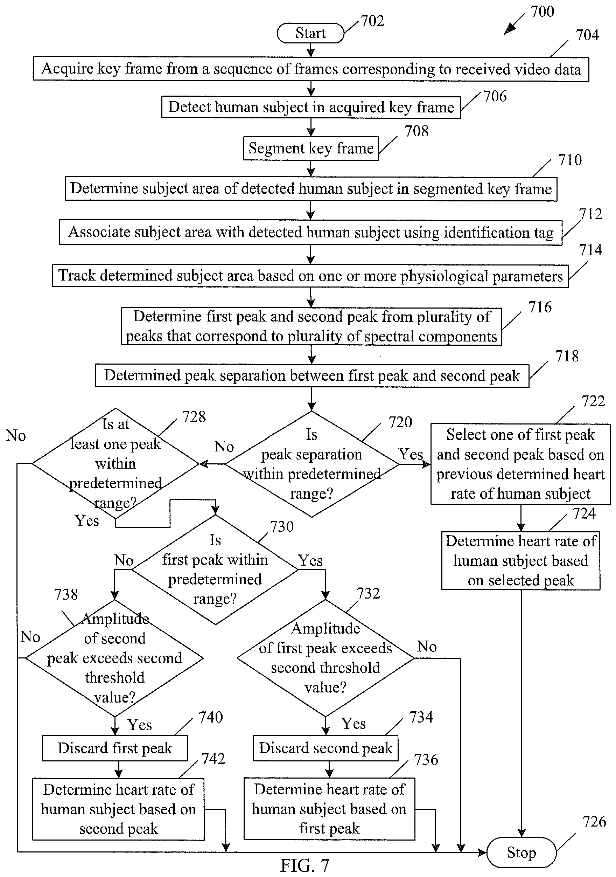

FIG. 7 is a flowchart illustrating a method 700 for video data processing, in accordance with an embodiment of the disclosure. FIG. 7 is described in conjunction with elements of FIG. 1, FIG. 2, FIG. 3, and FIG. 4. The method 700 may be implemented in the VDP device 102, which may be communicatively coupled to the remote server 106, and the video-capturing device 104.

The method 700 begins at step 702 and proceeds to step 704. At step 704, the key frame may be acquired from a sequence of frames. The sequence of frames may correspond to a received video data of a human subject. Each of the sequence of frames may be associated with a plurality of channels. Each of the plurality of channels may be associated with a plurality of spectral components. At step 706, the human subject 112 may be detected in the key frame acquired in step 704. At step 708, the selected key frame may be segmented to determine a plurality of segments. At step 710, a subject area of the detected human subject 112 may be determined from the plurality of segments in the segmented key frame. The determined subject area may include a skin area of the human subject.

At step 712, the subject area may be associated with the human subject using an identification tag. At step 714, the determined subject area may be tracked based on one or more physiological parameters. The plurality of spectral components may correspond to the tracked subject area. At step 716, a first peak and a second peak may be determined from the plurality of peaks that correspond to the plurality of spectral components. Amplitudes of the determined first peak and the second peak may exceed a first threshold value. At step 718, a peak separation between the determined first peak and the determined second peak may be determined.

At step 720, it may be determined whether the peak separation is within a predetermined range. In instances where the peak separation lies within a predetermined range, control passes to step 722. At step 722, one of the determined first peak and the determined second peak may be selected, based on a previous determined heart rate of the human subject, such that the parameter associated with the first peak and the second peak are within the predetermined range. At step 724, the heart rate of the human subject may be determined based on the selected one of the determined first peak and the determined second peak. Control passes to end step 726.

In instances where the peak separation is not within the predetermined range, the control passes to step 728. At step 728, it may be determined whether at least one peak of the first peak and the second peak is within the predetermined range. In instances where none of the first peak and the second peak is within the predetermined range, the control passes to end step 726. In instances where at least one of the first peak and the second peak is within the predetermined range, the control passes to step 730. At step 730, it may be determined whether the first peak is within the predetermined range.

In instances where the first peak is within the predetermined range, the control passes to step 732. At step 732, it may be determined whether the amplitude of the determined first peak exceeds a second threshold value. In instances where the first peak does not exceed a second threshold value, control passes to end step 726. In instances where the first peak exceeds a second threshold value, control passes to step 734. At step 734, the second peak may be discarded. At step 736, the heart rate of the human subject may be determined based on the determined first peak. Control passes to end step 726.

In instances where the second peak is within the predetermined range, the control passes to step 738. At step 738, it may be determined whether the amplitude of the determined second peak exceeds a second threshold value. In instances where the second peak does not exceed a second threshold value, control passes to end step 726. In instances where the second peak exceeds a second threshold value, control passes to step 740. At step 740, the first peak may be discarded. At step 742, the heart rate of the human subject may be determined based on the determined second peak. Control passes to end step 726.

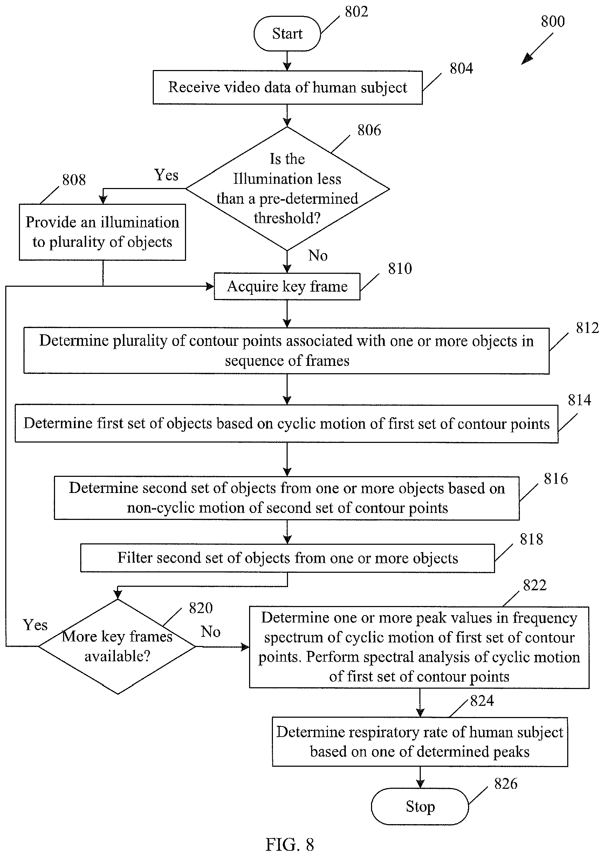

FIG. 8 is a flowchart illustrating another method 800 for video data processing, in accordance with an embodiment of the disclosure. FIG. 8 is described in conjunction with elements of FIG. 1, FIG. 2, FIG. 5, and FIG. 6. The method 800 may be implemented in the VDP device 102, which may be communicatively coupled to the remote server 106, and the video-capturing device 104.

The method 800 begins at step 802 and proceeds to step 804. At step 804, video data of a human subject comprising a sequence of frames, may be received. One or more of the sequence of frames may comprise one or more objects. At step 806, an ambient illumination of an environment that comprises the one or more objects, may be determined. In instances where the ambient illumination is less than a predetermined threshold, the control moves to step 808. In such instances, an active illumination to the one or more objects may be provided. In instances where the ambient illumination is greater than the predetermined threshold, the control moves to step 810. At step 810, a key frame may be acquired from the sequence of frames. The sequence of frames may correspond to a received video data.

At step 812, a plurality of contour points associated with the one or more objects in the sequence of frames, may be determined. A curvature of each of the plurality of contour points may exceed a curvature threshold value. At step 814, a first set of objects from the one or more objects in the sequence of frames may be determined, based on a cyclic motion of a first set of contour points. The first set of contour points may be determined from the plurality of contour points. At step 816, a second set of objects may be determined from the one or more objects, based on a non-cyclic motion of a second set of contour points. The second set of contour points may be determined from the plurality of contour points.

At step 818, the second set of objects may be filtered from the received one or more objects. At step 820, it may be determined whether more key frames are available. In instances where there are more key frames available, the control passes back to step 810. In instances where no more key frames are available, the control passes to step 822.

At step 822, one or more peak values in a frequency spectrum of the cyclic motion of the first set of contour points, may be determined. An amplitude of one of the determined one or more peak values may be above a pre-specified threshold value. A spectral analysis of the cyclic motion of first set of contour points may be performed. At step 824, a respiratory rate of the human subject may be determined, based on one of the determined one or more peak values. Control passes to end step 826.

In accordance with an embodiment of the disclosure, the video data processing system may comprise the VDP device 102 (FIG. 1) communicatively coupled to the video-capturing device 104. The VDP device 102 may comprise one or more processors, such as the processor 202 (FIG. 2), operable to receive video data of a human subject. Each of a sequence of frames of the video data may be associated with a plurality of spectral components. The processor 202 may be operable to determine a first peak and a second peak from a plurality of peaks that correspond to the plurality of spectral components. Amplitudes of the determined first peak and the second peak may exceed a first threshold value. The processor 202 may be operable to determine a peak separation between the determined first peak and the determined second peak. The determined peak separation may be within a predetermined range. Based on the determined peak separation, the processor 202 may be operable to determine a heart rate of the human subject.

Another exemplary aspect of the disclosure may comprise the video data processing system. The video data processing system may comprise an electronic device, such as a VDP device 102 (FIG. 1), communicatively coupled to the video-capturing device 104. The VDP device 102 may comprise one or more processors, such as the processor 202 (FIG. 2), operable to receive video data of a human subject. One or more of the sequence of frames of the received video data may comprise one or more objects. The processor 202 may further determine a plurality of contour points associated with the one or more objects in the sequence of frames, such that a curvature associated with each of the plurality of contour points exceeds a curvature threshold value. The processor 202 may further determine a first set of objects from the one or more objects in the sequence of frames based on a cyclic motion of a first set of contour points from the plurality of contour points. The processor 202 may further determine one or more peak values in a frequency spectrum of the cyclic motion of the determined first set of contour points. An amplitude of one of the determined one or more peak values may be above a pre-specified threshold value. Based on one of the determined one or more peak values, the processor 202 may determine a respiratory rate of the human subject.

Various embodiments of the disclosure may provide a non-transitory computer readable medium and/or storage medium, and/or a non-transitory machine readable medium and/or storage medium having stored thereon, a machine code and/or a computer program having at least one code section executable by a machine and/or a computer for video data processing. The at least one code section in an electronic device may cause the machine and/or computer to perform the steps comprising, in a video data processing device, receiving video data of a human subject. Each of a sequence of frames of the received video data may be associated with a plurality of spectral components. A first peak and a second peak may be determined from a plurality of peaks that correspond to the plurality of spectral components. Amplitudes of the determined first peak and the second peak may exceed a first threshold value. A peak separation between the determined first peak and the determined second peak may be determined. The determined peak separation may be within a predetermined range. Based on the determined peak separation, a heart rate of the human subject may be determined.

Another exemplary aspect of the disclosure may comprise a non-transitory computer readable medium and/or storage medium, and/or a non-transitory machine readable medium and/or storage medium having stored thereon, a machine code and/or a computer program having at least one code section executable by a machine and/or a computer for video data processing. The at least one code section in an electronic device may cause the machine and/or computer to perform the steps comprising, receiving video data of a human subject. One or more of a sequence of frames of the received video data may comprise one or more objects. The method may further comprise determining a plurality of contour points associated with the one or more objects in the sequence of frames, such that a curvature associated with each of the plurality of contour points exceeds a first threshold value. The method may further comprise determining a first set of objects from the one or more objects in the sequence of frames based on a cyclic motion of a first set of contour points from the plurality of contour points. One or more peak values in a frequency spectrum of the cyclic motion of the determined first set of contour points may be determined. An amplitude of one of the determined one or more peak values may be above a pre-specified threshold value. Based on the one of the determined one or more peak values, a respiratory rate of the human subject may be determined.

The present disclosure may be realized in hardware, or a combination of hardware and software. The present disclosure may be realized in a centralized fashion, in at least one computer system, or in a distributed fashion, where different elements may be spread across several interconnected computer systems. A computer system or other apparatus adapted for carrying out the methods described herein may be suited. A combination of hardware and software may be a general-purpose computer system with a computer program that, when loaded and executed, may control the computer system such that it carries out the methods described herein. The present disclosure may be realized in hardware that comprises a portion of an integrated circuit that also performs other functions.

The present disclosure may also be embedded in a computer program product, which comprises all the features enabling the implementation of the methods described herein, and which when loaded in a computer system is able to carry out these methods. Computer program, in the present context, means any expression, in any language, code or notation, of a set of instructions intended to cause a system having an information processing capability to perform a particular function either directly, or after either or both of the following: a) conversion to another language, code or notation; b) reproduction in a different material form.

While the present disclosure has been described with reference to certain embodiments, it will be understood by those skilled in the art that various changes may be made and equivalents may be substituted without departing from the scope of the present disclosure. In addition, many modifications may be made to adapt a particular situation or material to the teachings of the present disclosure without departing from its scope. Therefore, it is intended that the present disclosure not be limited to the particular embodiment disclosed, but that the present disclosure will include all embodiments falling within the scope of the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An image photoplethysmography (PPG) method comprising:
in an electronic device (102):
receiving video data of a human subject (112), wherein each of a sequence of frames of said received video data is associated with a plurality of spectral components (408, 410, 412);
determining (716) a first peak and a second peak from a plurality of peaks corresponding to said plurality of spectral components, wherein amplitudes of said determined said first peak and said determined said second peak exceed a first threshold value;
determining (718) whether said determined said first peak and said determined said second peak are within a predetermined range; and
determining (724) a heart rate of said human subject based on whether said determined said first peak and said determined said second peak are within said predetermined range.

2. The method of claim 1, wherein each of said sequence of frames is associated with a plurality of channels (402, 404, 406), wherein each of said plurality of channels is associated with said plurality of spectral components (408, 410, 412).

3. The method of claim 1, wherein said amplitude of said determined said first peak exceeds a second threshold value.

4. The method of claim 3, comprising determining (736) a heart rate of said human subject based on said determined said first peak.

5. The method of claim 1, further comprising discarding (734) said determined said second peak when said determined said second peak is not within said predetermined range.

6. The method of claim 1, further comprising selecting (722) one of said determined said first peak and said determined said second peak, based on a previous determined heart rate of said human subject, wherein said first peak and said second peak are within said predetermined range.

7. The method of claim 1, wherein said video data in each frame of said sequence of frames comprises a plurality of channels, wherein said plurality of channels comprises a Red (R) channel (402), a Green (G) channel (404), and a Blue (B) channel (406).

8. The method of claim 1, further comprising determining a plurality of spectral components (408, 410, 412) based on a signal separation of said video data in each frame of said sequence of frames.

9. The method of claim 1, further comprising detecting (706) said human subject (112) in one of said sequence of frames.

10. The method of claim 9, further comprising segmenting (708) said one of said sequence of frames comprising said detected human subject (112).

11. The method of claim 10, further comprising determining (710) a subject area of said detected human subject, wherein said determined said subject area includes a skin area of said human subject (112).

12. The method of claim 10, wherein said subject area is associated with said human subject (112) using an identification tag.

13. The method of claim 12, further comprising tracking (714) said determined said subject area based on one or more physiological parameters, wherein said plurality of spectral components correspond to said tracked said subject area.

14. The method of claim 13, wherein said one or more physiological parameters comprises one or more of: a skin texture, a skin pattern, and/or one or more features associated with said detected human subject (112).

## Patentansprüche

1. Verfahren zur Bild-Photoplethysmographie (PPG), umfassend:
in einer elektronischen Vorrichtung (102):
Empfangen von Videodaten eines menschlichen Probanden (112), wobei jeder von einer Folge von Frames der empfangenen Videodaten mit einer Mehrzahl von Spektralkomponenten (408, 410, 412) assoziiert wird;
Bestimmen (716) einer ersten Spitze und einer zweiten Spitze aus einer Mehrzahl von Spitzen, die der Mehrzahl von Spektralkomponenten entspricht, wobei Amplituden der bestimmten ersten Spitze und der bestimmten zweiten Spitze einen ersten Schwellenwert überschreiten;
Bestimmen (718), ob die bestimmte erste Spitze und die bestimmte zweite Spitze innerhalb eines vorbestimmten Bereichs liegen; und
Bestimmen (724) einer Herzfrequenz des menschlichen Probanden basierend darauf, ob die bestimmte erste Spitze und die bestimmte zweite Spitze innerhalb eines vorbestimmten Bereichs liegen.

2. Verfahren nach Anspruch 1, wobei jeder der Folge von Frames mit einer Mehrzahl von Kanälen (402, 404, 406) assoziiert wird, wobei jeder der Mehrzahl von Kanälen mit der Mehrzahl von Spektralkomponenten (408, 410, 412) assoziiert wird.

3. Verfahren nach Anspruch 1, wobei die Amplitude der bestimmten ersten Spitze einen zweiten Schwellenwert überschreitet.

4. Verfahren nach Anspruch 3, umfassend ein Bestimmen (736) einer Herzfrequenz des menschlichen Probanden basierend auf der bestimmten ersten Spitze.

5. Verfahren nach Anspruch 1, ferner umfassend ein Verwerfen (734) der bestimmten zweiten Spitze, wenn die bestimmte zweite Spitze nicht innerhalb des vorbestimmten Bereichs liegt.

6. Verfahren nach Anspruch 1, ferner umfassend ein Auswählen (722) einer der bestimmten ersten Spitze und der bestimmten zweiten Spitze basierend auf einer früher bestimmten Herzfrequenz des menschlichen Probanden, wobei die erste Spitze und die zweite Spitze innerhalb des vorbestimmten Bereichs liegen.

7. Verfahren nach Anspruch 1, wobei die Videodaten in jedem Frame der Folge von Frames eine Mehrzahl von Kanälen umfassen, wobei die Mehrzahl von Kanälen einen Rot (R)-Kanal (402), einen Grün (G)-Kanal (404) und einen Blau (B)-Kanal (406) umfasst.

8. Verfahren nach Anspruch 1, ferner umfassend ein Bestimmen einer Mehrzahl von Spektralkomponenten (408, 410, 412) basierend auf einer Signaltrennung der Videodaten in jedem Frame der Folge von Frames.

9. Verfahren nach Anspruch 1, ferner umfassend ein Erkennen (706) des menschlichen Probanden (112) in einem der Folge von Frames.

10. Verfahren nach Anspruch 9, ferner umfassend ein Segmentieren (708) des einen der Folge von Frames, der den menschlichen Probanden (112) umfasst.

11. Verfahren nach Anspruch 10, ferner umfassend ein Bestimmen (710) eines Probandenbereichs des erkannten menschlichen Probanden, wobei der bestimmte Probandenbereich einen Hautbereich des menschlichen Probanden (112) umfasst.

12. Verfahren nach Anspruch 10, wobei der Probandenbereich unter Verwendung eines Identifikationstags mit dem menschlichen Probanden (112) assoziiert wird.

13. Verfahren nach Anspruch 12, ferner umfassend ein Verfolgen (714) des bestimmten Probandenbereichs basierend auf einem oder mehreren physiologischen Parametern, wobei die Mehrzahl von Spektralkomponenten dem verfolgten Probandenbereich entspricht.

14. Verfahren nach Anspruch 13, wobei der eine oder die mehreren physiologischen Parameter einen oder mehrere von Folgenden umfassen: eine Hauttextur, ein Hautmuster und/oder ein oder mehrere Merkmale, die mit dem erkannten menschlichen Probanden (112) assoziiert sind.

## Revendications

1. Procédé de photopléthysmographie (PPG) à partir d'images comprenant :
dans un dispositif électronique (102) :
la réception de données vidéo d'un sujet humain (112), chaque trame d'une séquence de trames desdites données vidéo reçues étant associée à une pluralité de composantes spectrales (408, 410, 412) ;
la détermination (716) d'un premier pic et d'un deuxième pic à partir d'une pluralité de pics correspondant à ladite pluralité de composantes spectrales, des amplitudes dudit premier pic déterminé et dudit deuxième pic déterminé dépassant une première valeur seuil ;
la détermination (718) que ledit premier pic déterminé et ledit deuxième pic déterminé sont ou non à l'intérieur d'une gamme prédéterminée ; et
la détermination (724) d'une fréquence cardiaque dudit sujet humain selon que ledit premier pic déterminé et ledit deuxième pic déterminé sont ou non à l'intérieur de ladite gamme prédéterminée.

2. Procédé de la revendication 1, dans lequel chaque trame de ladite séquence de trames est associée à une pluralité de canaux (402, 404, 406), chaque canal de ladite pluralité de canaux étant associé à ladite pluralité de composantes spectrales (408, 410, 412).

3. Procédé de la revendication 1, dans lequel ladite amplitude dudit premier pic déterminé dépasse une deuxième valeur seuil.

4. Procédé de la revendication 3, comprenant la détermination (736) d'une fréquence cardiaque dudit sujet humain sur la base dudit premier pic déterminé.

5. Procédé de la revendication 1, comprenant en outre la mise à l'écart (734) dudit deuxième pic déterminé quand ledit deuxième pic déterminé n'est pas à l'intérieur de la gamme prédéterminée.

6. Procédé de la revendication 1, comprenant en outre la sélection (722) dudit premier pic déterminé ou dudit deuxième pic déterminé, sur la base d'une fréquence cardiaque déterminée antérieure dudit sujet humain, ledit premier pic et ledit deuxième pic étant à l'intérieur de ladite gamme prédéterminée.

7. Procédé de la revendication 1, dans lequel lesdites données vidéo dans chaque trame de ladite séquence de trames comprennent une pluralité de canaux, ladite pluralité de canaux comprenant un canal rouge (R) (402), un canal vert (G) (404), et un canal bleu (B) (406).

8. Procédé de la revendication 1, comprenant en outre la détermination d'une pluralité de composantes spectrales (408, 410, 412) sur la base d'une séparation du signal desdites données vidéo dans chaque trame de ladite séquence de trames.

9. Procédé de la revendication 1, comprenant en outre la détection (706) dudit sujet humain (112) dans une trame de ladite séquence de trames.

10. Procédé de la revendication 9, comprenant en outre la segmentation (708) de ladite trame de ladite séquence de trames comprenant ledit sujet humain (112) détecté.

11. Procédé de la revendication 10, comprenant en outre la détermination (710) d'une zone de sujet dudit sujet humain détecté, ladite zone de sujet déterminée comportant une zone de peau dudit sujet humain (112).

12. Procédé de la revendication 10, dans lequel ladite zone de sujet est associée audit sujet humain (112) au moyen d'une étiquette d'identification.

13. Procédé de la revendication 12, comprenant en outre le suivi (714) de ladite zone de sujet déterminée sur la base d'un ou plusieurs paramètres physiologiques, ladite pluralité de composantes spectrales correspondant à ladite zone de sujet suivie.

14. Procédé de la revendication 13, dans lequel ledit ou lesdits paramètres physiologiques comprennent un ou plusieurs éléments parmi : une texture de peau, un motif de peau, et/ou une ou plusieurs caractéristiques associées audit sujet humain (112) détecté.
